# EUROPEAN PATENT APPLICATION

(11) **EP 4 656 481 A1**
(43) Date of publication of application: **03.12.2025**
(21) Application number: 25178185.2
(22) Date of filing: 22.05.2025
(51) Int. Cl.: B60W 30/09, B60W 30/095, B60W 50/14, B64F 1/32

(54) **COLLISION AVOIDANCE SYSTEM AND METHOD**

(30) Priority: 29.05.2024 US 202463653063 P
(71) Applicant: TLD (Canada) Inc., Sherbrooke, Québec J1K 3C3 (CA)
(72) Inventor: FOLEY, Martin, Sherbrooke, J1N 3X9 (CA)
(74) Representative: Perronace, Andrea

(57) **Abstract**

A collision avoidance system for road trains that relies strictly on sensors installed on the tractors yet is effective at avoiding collisions between the dollies and obstacles and a method for operaing the system are disclosed. The collision avoidance system includes at least one exteroceptive sensor mounted to the tractor and configured to acquire environmental data, at least one proprioceptive sensor mounted to the tractor and configured to acquire a tractor direction, a tractor speed and/or a tractor velocity, and at least one processor configured to detect objets based on the environmental data, compute a trajectory of each of the at least one dolly based on dimensions of the tractor, dimensions of the at least one dolly, a number of the at least one dolly, the tractor direction, the tractor speed and/or the tractor velocity, and determine whether the trajectory intersects a boundary of one of the objects.

## Description

### TECHNICAL FIELD

The technical field relates to driving automation, and more specifically to systems and methods for detecting and avoiding impeding collisions in road trains.

### BACKGROUND

Collision avoidance systems have become prevalent in recent years, but most existing systems are geared towards detecting forward collision risks. Detecting collisions for articulated vehicles present a challenge, because an obstacle that lay outside the trajectory of the tractor may yet be in the trajectory of a trailer pulled by the tractor. Road trains are particularly challenging, because each trailer may follow a different trajectory.

This challenge is usually addressed by ensuring that trailers are visible by the tractor operator using rearview mirrors, or installing sensors on the trailers. In some scenarios, though, such as airport cargo tractors pulling dollies, it may not be practical or possible to install sensors on dollies because of practical constraints, and it may not be practical or possible to install rearview mirrors that allow the operator to view the dollies because of geometrical constraints.

### SUMMARY

The present disclosure provides a collision avoidance system for road trains that relies strictly on sensors installed on the tractors yet is effective at avoiding collisions between the dollies and obstacles, and a method for operating the system.

In accordance with an aspect, a collision avoidance system for a road train comprising a tractor and at least one dolly and a method for operating the same are provided. The system includes at least one exteroceptive sensor mounted to the tractor and configured to acquire environmental data, at least one proprioceptive sensor mounted to the tractor and configured to acquire a tractor direction, a tractor speed and/or a tractor velocity, and at least one processor. The at least one processor is configured to detect objets based on the environmental data, compute a trajectory of the tractor and each of the at least one dolly based on dimensions of the tractor, dimensions of the at least one dolly, a number of the at least one dolly, the tractor direction, the tractor speed and/or the tractor velocity, and determine whether the trajectory intersects boundaries of one of the objects.

In some embodiments, at least one dolly comprises at least two dollies.

In some embodiments, a coupling of the tractor with a first dolly defines a first angle and a coupling of the first dolly with a second dolly defines a second angle, and the first angle and the second angle can be different angles.

In some embodiments, each of the at least one dolly is sensorless.

In some embodiments, the road train is an airside vehicle.

In some embodiments, the road train is an airport cargo carrier train.

In some embodiments, the at least one exteroceptive sensor is mounted at the front of the tractor, and detecting the objects corresponds to detecting objects in an area in front of the tractor.

In some embodiments, the at least one processor is configured to compute the trajectory by applying a mathematical model.

In some embodiments, the at least one processor is configured to perform the intersection determination by identifying a detection envelope divided into a first zone corresponding to an area in front of a trajectory of the tractor, a second zone corresponding to an area outside the first zone and inside a left horizontal clearance of the road train, and a third zone corresponding to an area outside the first zone and inside a right horizontal clearance of the road train.

In some embodiments, the at least one processor is configured to perform the intersection determination by determining whether the road train will intersect the boundaries within a configurable time threshold based at least in part on the tractor speed.

In some embodiments, the system further includes an interface mounted on the tractor at a position visible by an operator, the interface being configured, in response to the processor determining that the trajectory intersects the boundaries of the one of the objects, to alert the operator.

In some embodiments, the alert comprises an audible alert.

In some embodiments, the audible alert is configured to provide an indication of a collision risk level by varying a beeping frequency and/or a volume.

In some embodiments, the alert comprises a visual warning.

In some embodiments, the visual warning is configured to provide an indication of a collision risk level before collision by varying a flashing frequency and/or a colour.

In some embodiments, the visual warning is configured to provide an indication of the zone in which the collision is detected.

In some embodiments, the interface is further configured to allow the operator to allow the operator to input the dimensions of the tractor, the dimensions of the at least one dolly, and/or the number of the at least one dolly.

In some embodiments, the system further includes a dolly presence detection sensor mounted to the tractor, the dolly presence detection sensor being configured to detect whether the at least one dolly is coupled to the tractor, and the processor is configured to activate rearside collision detection in response to the at least one dolly being coupled to the tractor.

In some embodiments, the dolly presence detection sensor is a distance sensor mounted to a hitch of the tractor and configured to detect whether a dolly towbar is attached to the hitch.

In some embodiments, the road train implements autonomous driving, and the road train is configured, in response to the processor determining that the trajectory intersects the boundaries of the one of the objects, to actuate brakes.

In some embodiments, the road train implements autonomous driving, and the road train is configured, in response to the processor determining that the trajectory intersects the boundaries of the one of the objects, to plan a new trajectory.

In accordance with another aspect, a collision avoidance system for an airport cargo carrier train comprising a cargo tractor equipped with sensors and a plurality of sensorless dollies is provided. The system includes an exteroceptive sensor mounted to a front part of the cargo tractor and configured to acquire environmental data, a direction sensor mounted to the cargo tractor and configured to acquire direction data, a speed sensor mounted to the cargo tractor and configured to acquire speed data, at least one processor, and an interface mounted on the tractor at a position visible by an operator, the interface being configured, in response to the processor determining that the trajectory intersects the boundaries of the one of the objects, to alert the operator. The at least one processor is configured to detect objets based on the environmental data, compute a trajectory of the airport cargo carrier train based on dimensions of the cargo tractor, dimensions of the dollies, a number of the dollies, the direction data, and the velocity data, wherein the trajectory defines a plurality of angles, and wherein the plurality of angles can comprise different angles, and determine whether the trajectory intersects boundaries of one of the objects, and

In accordance with a further aspect, a collision avoidance method for an airport cargo carrier train comprising a cargo tractor and a plurality of sensorless dollies is provided. The method includes acquiring environmental data by an exteroceptive sensor of the cargo tractor, detecting objets based on the environmental data, acquiring direction data by a direction sensor of the cargo tractor, acquiring speed data by a speed sensor of the cargo tractor, computing a trajectory of the airport cargo carrier train based on dimensions of the cargo tractor, dimensions of the dollies, a number of the dollies, the direction data, and the velocity data, wherein the trajectory defines a plurality of angles, and wherein the plurality of angles can comprise different angles, determining whether the trajectory intersects boundaries of one of the objects, and in response to determining that the trajectory intersects the boundaries of the one of the objects, alerting an operator of the airport cargo carrier train.

In accordance with yet another aspect, a collision avoidance system for a road train comprising a tractor and at least one dolly is provided. The system includes at least one exteroceptive sensor mounted to the tractor and configured to acquire environmental data, at least one proprioceptive sensor mounted to the tractor and configured to acquire a tractor direction, a tractor speed and/or a tractor velocity, and at least one processor configured to detect objets based on the environmental data, compute a trajectory of each of the at least one dolly based on dimensions of the tractor, dimensions of the at least one dolly, a number of the at least one dolly, the tractor direction, the tractor speed and/or the tractor velocity, and determine whether the trajectory intersects a boundary of one of the objects.

In some embodiments, the road train is an airside vehicle.

In some embodiments, a coupling of the tractor with a first dolly defines a first angle and a coupling of the first dolly with a second dolly defines a second angle, and wherein the first angle and the second angle can be distinct angles.

In some embodiments, each of the at least one dolly is sensorless.

In some embodiments, the at least one exteroceptive sensor is mounted at the front of the tractor, and wherein detecting the objects corresponds to detecting objects in an area in front of the tractor.

In some embodiments, the at least one processor is configured to perform the intersection determination by identifying a detection envelope divided into a first zone corresponding to an area in front of a trajectory of the tractor, a second zone corresponding to an area outside the first zone and inside a left horizontal clearance of the road train, and a third zone corresponding to an area outside the first zone and inside a right horizontal clearance of the road train.

In some embodiments, the at least one processor is configured to perform the intersection determination by determining whether the road train will intersect the boundary within a time threshold based at least in part on the tractor speed.

In some embodiments, the system further includes an interface mounted on the tractor, the interface being configured, in response to the processor determining that the trajectory intersects the boundary of the one of the objects, to alert the operator via an audible alert configured to provide an indication of a collision risk level by varying a beeping frequency and/or a volume and/or a visual warning configured to provide an indication of a collision risk level by varying a flashing frequency and/or a colour.

In some embodiments, the system further includes a dolly presence detection sensor mounted to the tractor, the dolly presence detection sensor being configured to detect whether the at least one dolly is coupled to the tractor, wherein the processor is configured to activate rearside collision detection in response to the at least one dolly being coupled to the tractor.

In some embodiments, the road train implements autonomous driving, and wherein road train is configured, in response to the processor determining that the trajectory intersects the boundary of the one of the objects, to actuate brakes and/or to plan a new trajectory.

In accordance with yet a further aspect, a collision avoidance method for a road train comprising a tractor and at least one dolly is provided. The method includes acquiring environmental data, detecting objets based on the environmental data, acquiring tractor direction data and/or tractor speed data, computing a trajectory of each of the at least one dolly based on dimensions of the tractor, dimensions of the at least one dolly, a number of the at least one dolly, the tractor direction data and/or the tractor speed data, and assessing a risk of the trajectory intersecting a boundary of one of the objects.

In some embodiments, the road train is an airside vehicle.

In some embodiments, a coupling of the tractor with a first dolly defines a first angle and a coupling of the first dolly with a second dolly defines a second angle, and wherein the first angle and the second angle can be distinct angles.

In some embodiments, each of the at least one dolly is sensorless.

In some embodiments, detecting the objects corresponds to detecting objects in an area in front of the tractor.

In some embodiments, the intersection determination is based on identifying a detection envelope divided into a first zone corresponding to an area in front of a trajectory of the tractor, a second zone corresponding to an area outside the first zone and inside a left horizontal clearance of the road train, and a third zone corresponding to an area outside the first zone and inside a right horizontal clearance of the road train.

In some embodiments, the intersection determination comprises determining whether the road train will intersect the boundary within a time threshold based at least in part on the tractor speed.

In some embodiments, the method further includes, in response to determining that the trajectory intersects the boundary of the one of the objects, alerting the operator via an audible alert configured to provide an indication of a collision risk level by varying a beeping frequency and/or a volume, and/or a visual warning configured to provide an indication of a collision risk level by varying a flashing frequency and/or a colour.

In some embodiments, the method further includes detecting whether the at least one dolly is coupled to the tractor, and activating rearside collision detection in response to the at least one dolly being coupled to the tractor.

In some embodiments, the road train implements autonomous driving, further comprising, in response to the processor determining that the trajectory intersects the boundary of the one of the objects, actuating brakes and/or planning a new trajectory.

### BRIEF DESCRIPTION OF THE DRAWINGS

For a better understanding of the embodiments described herein and to show more clearly how they may be carried into effect, reference will now be made, by way of example only, to the accompanying drawings which show at least one exemplary embodiment.
Figure 1 is a perspective view of an airport cargo carrier train with a collision avoidance system in accordance with an embodiment.
Figure 2 is a top view of an airport cargo carrier train with a collision avoidance system in accordance with an embodiment.
Figure 3 is a perspective view of a hitch including a dolly presence detection sensor in accordance with an embodiment.
Figure 4 is a flowchart of a collision avoidance method for an airport cargo carrier train in accordance with an embodiment.
Figure 5 in an illustration of an interface for a collision avoidance system in accordance with an embodiment.

### DETAILED DESCRIPTION

It will be appreciated that, for simplicity and clarity of illustration, where considered appropriate, reference numerals may be repeated among the figures to indicate corresponding or analogous elements or steps. In addition, numerous specific details are set forth in order to provide a thorough understanding of the exemplary embodiments described herein. However, it will be understood by those of ordinary skill in the art that the embodiments described herein may be practised without these specific details. In other instances, well-known methods, procedures and components have not been described in detail so as not to obscure the embodiments described herein. Furthermore, this description is not to be considered as limiting the scope of the embodiments described herein in any way but rather as merely describing the implementation of the various embodiments described herein.

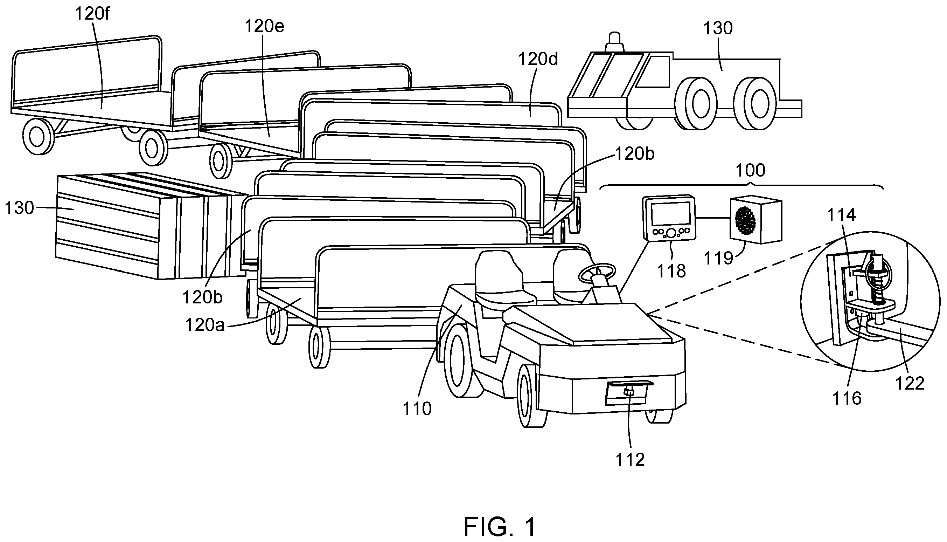

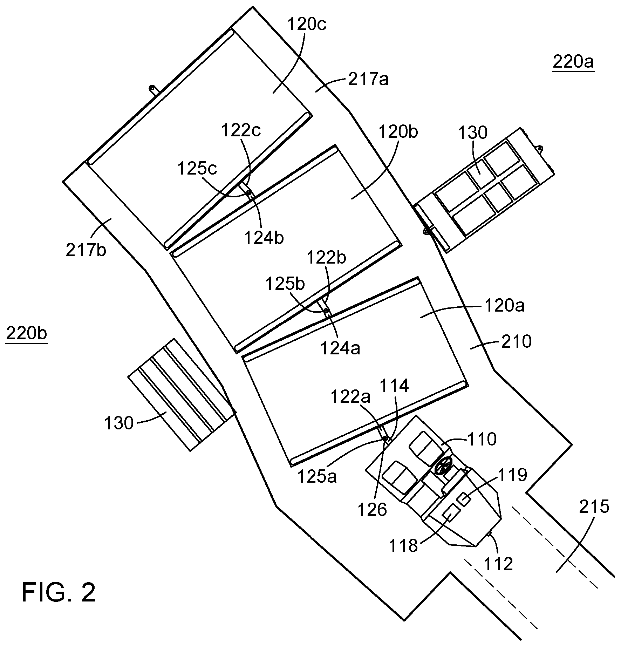

With reference to Figures 1 and 2, a road train with an exemplary collision avoidance system 100 is shown. Broadly described, the collision avoidance system includes at least one exteroceptive sensor 112, at least one proprioceptive sensor, at least one processor and at least one output device 118, 119.

The train corresponds to an articulated vehicle including a plurality of members, such as a tractor 110 and multiple dollies 120, coupled to one another at hinge joints that allows for the members to pivot horizontally relative to one another. As an example, a first dolly 120a can be coupled to the tractor 110 via a hitch assembly 114 mounted to the frame of the tractor and a towbar 122a mounted to the frame of the first dolly 120a, a second dolly 120b can be attached by a hitch assembly 124a mounted to the frame the first dolly 120a and a towbar 122b mounted to the frame of the second dolly 120b, and so on. It can be appreciated that each coupling defines an angle 125 between two coupled members, and that some or all of these angles can be different at any given time, with the consequence that each dolly being pulled by a tractor 110 can follow a different trajectory. In this context, possible collisions of dollies with objects 130 in the environment can be difficult to detect before they occur, as the operator cannot always view the dollies and their environment. The train can be unmanned or manned by an operator, for instance installed in the tractor 110.

In some embodiments, the road train is a vehicle designed to operate within the boundaries of an airport. For instance, the road train can be a service vehicle operating on the landside and/or the airside of an airport area. As an example, the train can for instance be an airport cargo carrier train. Dollies 120 or airport cargo carrier train can be used to transport unit load devices, many of which, such as "type A" certified aircraft containers, have a width of 3,175 mm. Pallet dollies can have even larger widths, with 3,460 mm. In contrast, a cargo tractor 110 can have a width as small as 1360 mm, making it impractical or impossible to install rearview mirrors that would allow the train operator to view the train and its environment.

In some embodiments, all the components of the collision avoidance system 100 are advantageously installed on the tractor 110. This offers numerous benefits. As an example, if sensors and/or other electronic equipment were fitted to dollies 120, it would be necessary to operatively couple said sensors and/or electronic equipment to the system installed on the tractor 110 whenever a dolly is coupled to the tractor, which would be inconvenient in a context where dollies are coupled to and uncoupled from different tractors frequently during operation and can be placed in different orders. As another example, dollies 120 are frequently involved in collisions, which would compromise any electronics mounted thereon. Moreover, having all the components of the collision avoidance system 100 installed on the tractor 110 means that the system 100 can be used in road trains including generic, sensorless dollies, making it more economically feasible to retrofit the system to existing equipment.

The system 100 includes at least one exteroceptive sensor 112 mounted on the tractor 110 and configured to acquire environmental data from which objects 130 can be detected. In some embodiments, an exteroceptive sensor 112 is mounted to the front of the tractor to allow for detection of objects 130 in front of the tractor. The exteroceptive sensor(s) 112 can include one or more optical transceiver such as a LiDAR transceiver, configured to project a laser beam, detect its reflection, and construct therefrom environmental data in the form of a LiDAR point cloud including tridimensional coordinates of reflective object surfaces. In some embodiments, the exteroceptive sensor(s) 112 can include one or more camera configured to acquire environmental data by corresponding to captured images of the environment, for instance colour and/or infrared, monoscopic and/or stereoscopic camera(s).

The system 100 includes at least one proprioceptive sensor (not shown) mounted on the tractor 110 and configured to acquire data related for instance to the tractor position data, tractor direction data, tractor speed data and/or tractor velocity data. As examples, the proprioceptive sensor(s) can include an accelerometer configured to detect and quantify movement of the tractor 110, a steering position sensor, an inductive speed sensor, a vehicle speed sensor, a geopositioning sensor and/or a satellite navigation device. As examples, tractor position data can include bidimensional or tridimensional coordinates in a local and/or in a world coordinate system, tractor direction data can include a bidimensional or tridimensional unit vector in reference to the local and/or the world coordinate system and/or an angle with respect to a reference point of the local and/or the world coordinate system, tractor speed data can include a speed expressed in a suitable unit such as metres per second, and tractor velocity data can include a vector representing a speed and a direction in reference to the local and/or the world coordinate system.

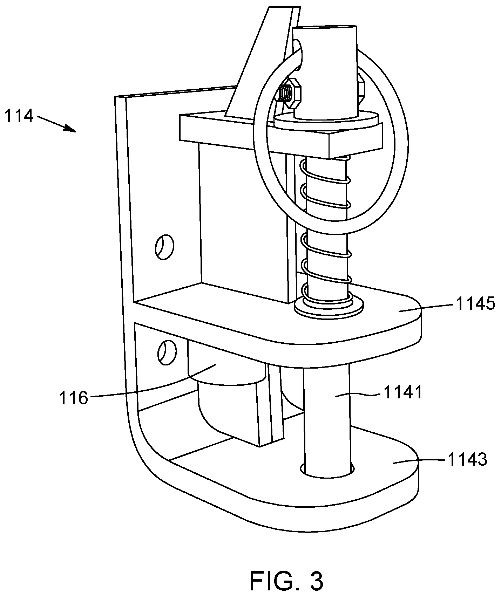

In some embodiments, the at least one proprioceptive sensor(s) include at least one dolly presence detection sensor 116 configured to acquire dolly presence data indicative of whether a dolly is coupled to the tractor 110. The dolly presence detection sensor(s) 116 can be mounted on the hitch 114 of the tractor 110. As an example, with reference to Figure 3, the dolly presence detection sensor(s) 116 can include a distance sensor mounted on an inside side of a first hitch portion 1143 and opposite an inside side of a second hitch portion 1145, the two hitch portions 1143, 1145 being parallel and linked by a rod 1141 adapted to receive the hook of a towbar 122, such that, in the absence of a towbar 122, the distance sensor measures a first distance and, in the present of a towbar 122, the distance sensor measures a second distance, lesser than the first distance, thereby allowing for a determination that a dolly is coupled to the tractor. In some embodiments, rearside collision detection, i.e., the detection of potential collisions by dollies, is enabled based on the determination that a dolly is coupled to the tractor.

The system 100 includes at least one processor (not shown) operatively coupled to the sensors and configured to receive and process environment data, tractor position data, tractor direction data, tractor speed data, tractor velocity data and/or dolly presence data. The processor(s) can for instance be part of or correspond to a printed circuit board, a microcontroller unit, an embedded computer controller, a single-board computer and/or a general-purpose computer. The at least one processor can be installed in the tractor 110. In some embodiments, the at least one processor can be part of a system distant from the tractor 110 and in communication with the tractor 110. As an example, the tractor 110 can include a communication device configured to transmit sensor data to the at least one processor and to receive signals from the at least one processor, for instance to generate a specific output on an output device. The processor can be said to perform computations corresponding to a number of modules, including for instance an object detection module, a trajectory computation module, and a collision risk assessment module.

The object detection module is configured to receive the environment data, e.g., LiDAR point cloud(s) and/or image(s) captured by the exteroceptive sensor of the tractor 110 and detect objects 130 therefrom. Any suitable object detection technique can be used alone or in combination, including for instance geometric and/ot topological algorithms, region proposal algorithms, feature-based detection algorithms, support vector machine algorithms and/or neural networks, such as convolutional neural networks. The object detection module can be configured to compute bounding boxes around objects and/or to detect object contours. In some embodiments, the object detection module is configured to apply segmentation algorithms such as semantic segmentation algorithms or instance segmentation algorithms. In some embodiments, the object detection module is configured to label objects. In some embodiments, the object detection module is configured to discriminate between static objects, such as a container, and dynamic objects, such as a vehicle in motion. In some embodiments, the object detection module is configured to predict a trajectory of dynamic objects, for instance by using environment data at different points in time to establish an input trajectory sequence and apply regression algorithms to predict one or more output trajectory sequence over a suitable time frame, for instance three seconds. In some embodiments, the union of the current and predicted bounding boxes and/or contours of an object can be used to define an obstacle bounding box and/or contours.

In some embodiments, the object detection module is configured to detect object boundaries based on a LiDAR point cloud using a combination of voxelization, ground segmentation, clustering, and/or boundary refinement techniques. In some embodiments, the LiDAR point cloud can first be pre-processed to reduce data complexity and/or remove noise. Pre-processing can for instance include filtering operations to discard isolated points or spurious reflections and can further include downsampling techniques, such as voxel grid filtering, wherein the three-dimensional point cloud can be partitioned into a regular voxel grid and the points within each voxel can be aggregated into a representative point, for instance by computing the centroid of the voxel. Following pre-processing, a ground segmentation stage can be applied to distinguish between ground-level points and points corresponding to elevated features in the environment. Ground segmentation can be performed using any suitable approach, such as plane-fitting algorithms like random sample consensus-based methods, morphological filtering techniques and/or elevation-based heuristics. The object detection module can identify one or more candidate ground planes and can exclude corresponding inlier points from further processing to isolate points that are more likely to correspond to objects of interest. The remaining points can then for instance be grouped into clusters using a suitable clustering technique. In some embodiments, Euclidean clustering can be applied, wherein points that are located within a predefined distance threshold of one another are grouped together as a cluster. Other clustering techniques can additionally or alternatively be used, such as density-based clustering, region-growing algorithms, or learning-based segmentation methods. Each cluster can be interpreted as representing a distinct object in the environment. For each identified cluster, the object detection module can compute an initial object boundary. This boundary can be represented by a three-dimensional bounding box, an oriented bounding box, a convex hull, or another geometric construct suitable for enclosing the points associated with the object. In some embodiments, principal component analysis or other orientation-estimation techniques can be applied to align the bounding box with the primary axes of the object, thereby improving the tightness of the fit. In some embodiments, further boundary refinement can be performed to more accurately capture the shape of the object. This refinement can include surface reconstruction algorithms, contour extraction techniques, α-shape methods, or concave hull approximations. Such techniques can be particularly useful for objects with irregular or non-convex geometries. In some cases, the point density and spatial distribution of the LiDAR data can be taken into account to select the most appropriate boundary representation. In some embodiments, object boundaries can be maintained across multiple frames of LiDAR data using a temporal fusion strategy, such as a filtering algorithm or a learning-based temporal model. For instance, the object detection module can associate corresponding clusters over time and update the boundary representation based on accumulated observations. This can allow for improved robustness in the presence of partial occlusions, sparse data, or sensor noise.

The trajectory computation module is configured to receive tractor position data, tractor direction data, tractor speed data, tractor velocity data and/or dolly presence data, and/or dimensions of the tractor 110, dimensions of each dolly 120, and number of dollies present, and compute therefrom a trajectory of the road train. In some embodiments, the trajectory is computed by performing kinematic analysis based on a kinematic mathematical model. As examples only, the Ackermann steering system, the double Ackermann steering system, the Caster steering system and/or the Fifth Wheel steering system can be used as the basis of the kinematic model to predict the angle 125a between the tractor 110 and the first dolly 120a and/or the angles 125 between dollies 120. In some embodiments, an iterative method is applied, wherein a steering angle of the first dolly 120a is computed based on a steering angle of the tractor 110, and wherein a steering angle of the i+1'th dolly is computed based on the steering angle of the i'th dolly.

In some embodiments, the computation is repeated a number of times to account for speed of the train to determine a trajectory of the train over a suitable time frame, for instance three seconds.

In some embodiments, the trajectory can be used to define zones, e.g., danger zones. As an example, a first zone 215 can be defined to correspond to an area in front of a trajectory of the tractor 110, a second zone 217a can be defined to correspond to an area outside the first zone 215 and inside a left horizontal clearance of the road train, and a third zone 217b can be determined to correspond to an area outside the first zone 215 and inside a right horizontal clearance of the road train. In some embodiments, the clearance can be adjusted to account for a suitable safety margin. In some embodiments, the danger zones together define a detection envelope 210, which can for instance correspond to the union of each of the first zone 215, second zone 217a and third zone 217b. In some embodiments, the danger zones can be used to define one or more zones that are outside the envelope and can therefore be considered safe, including for instance a zone on the left side of the convey 220a and a zone on the right side of the convey 220b.

The collision risk assessment module is configured to receive the boundaries and/or trajectories of objects 130 from the object detection module and the boundaries and/or trajectories of the tractor 110 and dollies 120 from trajectory computation module, and determine if a collision risk exists. It can be appreciated that object boundaries and trajectories and the train boundaries and trajectories can be received in different coordinate systems. In some embodiments, the collision risk assessment module is configured to determine a geometric transform applicable to either coordinate system to convert its coordinates in coordinates of the other coordinate system, and/or geometric transforms applicable to convert coordinates in either coordinate system in coordinates of a common coordinate system, based for instance of the known location of the exteroceptive sensor with respect to the body of the tractor 110. The collision risk assessment module can be configured to convert boundaries, trajectories, zones and/or envelopes in polygons and to assess a collision risk based on whether an intersection exists between polygons. As an example, a collision risk can be assumed to exist when the boundaries of an object intersects with the trajectory of the train. As another example, a collision risk can be assumed to exist when the boundaries of an object 130 intersects with the envelope 210. In some embodiments, different types of collision risks can be defined to correspond, for instance, to a situation when the boundaries of an object 130 intersects with the first zone 215, to a situation when the boundaries of an object 130 intersects with the second zone 217a, and/or to a situation when the boundaries of an object 130 intersects with the third zone 217b. In some embodiments, a risk level is assessed more finely by verifying the existence of intersections over trajectories at different time thresholds, for instance 0.5 s, 1.0 s, 1.5 s, 2.0 s, 2.5 s and 3.0 s, with an intersection being observed over a shorter time frame corresponding to a higher risk level assessment than an intersection being observed over a longer time frame.

The system 100 can include at least one interface, e.g., at least one output device such as devices 118 and 119, mounted on the tractor 110 configured to convey a collision risk assessment to an operator, for instance by alerting the operator in case the trajectory of the train is predicted to intersect an object 130 over a configurable time threshold. The output device(s) can include an interface 118 including a screen in a position visible by the operator, for instance mounted on the dashboard of the tractor 110. The screen can be configured to display a visual warning commensurate to the assessed risk level. For instance, the visual warning can be configured to vary a flashing frequency and/or a colour based on the risk level. As an example, as a collision becomes more imminent, the visual warning could turn from yellow to red, and flash faster. The output device(s) can include a speaker 119 and/or another type of audible alert device such as a bell in a position where it can be heard by the operator. The speaker 119 can be configured to create an audible alert commensurate to the assessed risk level. For instance, the audible alert can be configured to vary a beeping frequency and/or a volume based on the risk level. As an example, as a collision becomes more imminent, the audible alert could beep faster and louder. In some embodiments, the interface is configured to allow an operator, a foreman and/or a manager to input or modify configuration data, including for instance the tractor 110 dimensions and tolerance, the dollies 120 dimensions and tolerance, the number of dollies (or dolly train size) and/or detection sensitivity adjustment factors, and/or to enable or disable collision detection system 100.

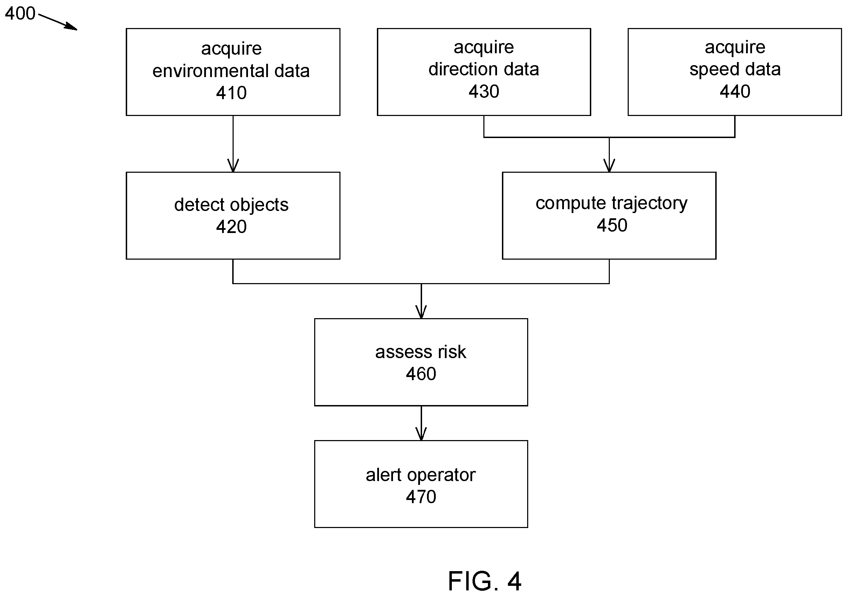

With reference to Figure 4, an exemplary road train collision avoidance method 400 is shown. Broadly described, the collision avoidance method includes sensor data acquisition steps 410, 430, 440, calculation steps 420, 450, 460, and an alert step 470. The collision avoidance method 400 can be implemented thanks to a collision avoidance system such as system 100 described above, although it can be appreciated that alternative systems can allow for implementing method 400.

In step 410, environmental data is acquired, for instance by an exteroceptive sensor of the tractor such as a LiDAR transducer. In step 420, objects in the environment are detected and mapped based on the environment data, for instance using a combination of voxelization, ground segmentation, clustering, and/or boundary refinement techniques as described above.

In step 430, direction data is acquired, for instance by a direction sensor of the tractor. In step 440, speed data is acquired, for instance by a speed sensor of the tractor. As an example, both direction data and speed data can be acquired by an accelerometer.

In step 450, based on the direction and speed data, on the dimensions of the tractor and dollies and on the number of dollies, the trajectory of the road train is computed, for instance using a kinematic mathematical model such as the Ackermann steering system. Computing the trajectory can include computing steering angles of the tractor and of each dolly, and/or articulation angles between the tractor and the first dolly and between each dolly and the subsequent dolly.

In step 460, a determination is made of whether there exists a collision risk, including for instance determining whether an intersection between the objects detected in step 420 and the trajectory of the train computed in step 450 exists, as a means of assessing a collision risk.

In some embodiments, in step 470, if an intersection is found and therefore there exists a collision risk, the operator of the road train is alerted, for instance by a visual warning and/or by an audible alert. In some embodiments, automatic actuation of a suitable function of the vehicle can be enacted when it has been determined that a collision risk exists. As an example, a manned of unmanned vehicle can automatically actuate breaking. As another example, a manned or unmanned vehicle implementing autonomous driving functionalities can plan a new trajectory that avoids the object(s) detected within the current trajectory of the train.

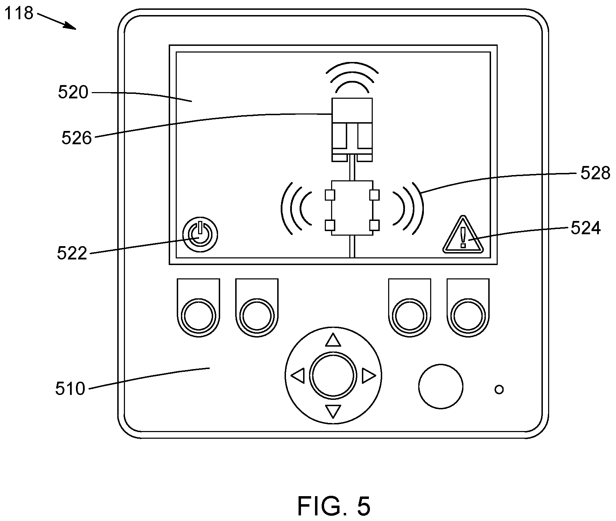

With reference to Figure 5, an exemplary interface 118 for a collision avoidance system is shown. Broadly described, the interface 118 includes controls 510 for inputting settings and a screen 520 for displaying information.

The controls 510 can include one or more buttons, a directional pad and/or an OK button. The directional pad can include directional inputs such as up, down, left, and right, and can be used to navigate through menu options or adjust settings. The buttons can be configured to perform various functions depending on the system context, and the OK button can be used to confirm selections or initiate commands. For instance, the controls 510 can be configured to allow the operator to allow the operator to input the dimensions of the tractor, the dimensions of the dolly or dollies, and/or the number of dollies. The input interface can be implemented using any suitable hardware, such as physical switches, capacitive touch sensors, or virtual controls displayed on a screen.

The screen 520 can be configured to display information regarding the status of the collision avoidance system and/or to convey the collision risk assessment. The screen 520 can be configured to display an icon 522 indicating that the collision avoidance is operating. In some embodiments, the icon can have a specific colour and/or flashing patterns to indicate that the system is initializing. In some embodiments, the icon 522 can have a specific colour and/or flashing patterns to indicate that the system is disabled. The screen 520 can be configured to display an icon 524 indicating that an error is active. The screen can be configured to display a graphical representation of the road train 526 to assist the operator in interpreting the collision risk assessment indicator(s). Finally, the screen can be configured to display one or more collision risk assessment indicator(s) 528. As an example, in systems including zones as described above with reference to Figure 2, a first indicator can be used to display a risk assessment for the first zone 215, a second indicator can be used to display a risk assessment for the second zone 217a, and/or a third indicator can be used to display a risk assessment for the third zone 217b, providing the operator with additional information regarding the risk and the best strategy to avoid a collision. In some embodiments, the indicator(s) 528 can have a specific colour and/or flashing patterns to represent different risk levels. As an example, an indicator 528 can be displayed in yellow to indicate that a collision risk exists and in red to indicate that a collision in imminent, for instance based on two different time-to-collision thresholds.

One or more systems, methods, modules, steps or functionalities described herein may be implemented in computer programs executed on one or more processing devices, each comprising at least one processor, a data storage system (including both volatile and/or non-volatile memory and/or storage elements), and optionally at least one input and/or output device. These processing devices encompass a broad range of electronic systems capable of receiving, processing, and/or transmitting data. Examples of processing devices include, without limitation, general-purpose computers, specialized computing devices, and embedded systems. Processing devices may be implemented on dedicated hardware, including programmable hardware such as field-programmable gate arrays (FPGAs), or as software-based solutions on cloud computing platforms or serverless architectures.

Processing devices suitable for implementing the present invention may include programmable logic units, mainframe computers, servers, personal computers, laptops, cloud-based systems, personal digital assistants (PDAs), cellular telephones, smartphones, wearable devices, tablets, video game consoles, and portable video game devices. Each of these devices has the ability to execute instructions and can operate individually or in combination to perform the functionality described. The processing devices may be deployed in a variety of configurations, from single-device implementations to distributed systems that involve multiple devices collaborating to achieve a common purpose. For example, a method could be implemented on a single microcontroller in an embedded system, or distributed across a network of servers that share computational tasks.

The instructions that enable a processing device to perform a given method or function can be stored in the form of a computer program. This computer program may be implemented in a high-level programming language, such as an imperative language, including procedural or object-oriented languages like C++, Java, or Python, which are suited for a wide range of applications and can easily interface with various system components. High-level programming languages can also include declarative languages, such as functional languages like Haskell or logic languages like Prolog, which allow developers to specify what the program should accomplish rather than describing step-by-step operations. These high-level languages can improve development efficiency and code readability.

Alternatively, computer programs may be implemented in low-level languages, such as assembly or machine code, especially when direct hardware control or optimization is required. Low-level languages are closer to machine instructions and provide precise control over hardware resources, which can be advantageous in resource-constrained environments, such as embedded systems. Programs written in low-level languages can be used in applications that require high performance, small memory footprints, or real-time processing capabilities.

Each computer program may be either compiled or interpreted. Compiled languages, such as C or C++, can be transformed into machine code optimized for a specific hardware configuration, allowing efficient execution. Compilation can result in highly optimized executables that are tailored to the underlying architecture, which is advantageous in performance-critical applications. Interpreted languages, such as Python or JavaScript, offer flexibility by interpreting code at runtime. This allows for rapid development and platform independence, as the same code can be run on different systems with minimal modifications. Hybrid approaches, such as Java bytecode or .NET Common Intermediate Language (CIL), combine elements of both compiled and interpreted paradigms. In these cases, code is compiled to an intermediate representation that can be executed by a virtual machine on various platforms, providing cross-platform compatibility.

Each computer program implementing the methods or systems described herein is preferably stored on a computer-readable storage medium or device. Examples of such storage media include hard drives, solid-state drives, optical disks, flash memory, and magnetic tape. The computer-readable storage medium is readable by a general or special-purpose programmable computer, which, upon reading the instructions, can configure itself to perform the steps described herein. These instructions may include executable code, scripts, or markup that instructs the computer on how to operate and handle data, making the system or method functional. In some embodiments, the system or method may be embedded within an operating system running on a programmable computer, allowing for deeper integration with the hardware and enabling enhanced performance, security, or user interface features.

Processing devices implementing the present invention may contain a variety of hardware components that support program execution. Processors used within these devices include general-purpose central processing units (CPUs), which are capable of executing a wide variety of instructions, as well as specialized processors. Examples of specialized processors include graphics processing units (GPUs), which can be optimized for parallel processing and/or used in data-intensive applications like machine learning, digital signal processors (DSPs), which are designed for handling real-time audio, video, and other signal processing tasks, and application-specific integrated circuits (ASICs), which are tailored to specific functions and are often used in applications requiring high efficiency. Multicore and/or multithreaded processors can allow for concurrent execution of multiple tasks, improving overall performance, for instance in multi-user or real-time environments.

The processing device may further include various types of memory. Volatile memory, such as registers, cache, and random-access memory (RAM), can be used for temporary data storage during active program execution, providing fast access to data that the processor frequently uses. Non-volatile memory, such as read-only memory (ROM), flash memory, solid-state drives, hard disks, and optical disks, can be used to retain data even when the processing device is powered off, making it suitable for long-term data storage. Other examples of non-volatile storage media include diskettes, magnetic tapes, chips, and compact disks, among others. The type of memory selected can depend on specific requirements, such as the need for rapid access, data retention, or data durability under power cycling. The memory configuration of a processing device can be adjusted to support varying levels of computational demand, from lightweight applications with minimal memory requirements to complex systems requiring large data caches.

Networking solutions within a processing device enable inter-process communication and network communication over wired or wireless connections. Examples of networking technologies include Ethernet for high-speed wired connections, Wi-Fi for wireless data transmission, Bluetooth for short-range device communication, and cellular networks for broader geographic coverage. These networking solutions support various network topologies, including local area networks (LAN), wide area networks (WAN), and other network types such as personal area networks (PAN) and metropolitan area networks (MAN), as well as the Internet. Through these networks, processing devices can communicate with one another to distribute tasks, share data, and collaborate on complex computations. This communication can occur within a single building or across geographically dispersed locations, depending on the application requirements. Implementing networking security measures can be advantageous to protect data as it travels across potentially vulnerable channels. Key security principles can include confidentiality, integrity, and availability. Confidentiality can be achieved for instance through encryption protocols like Secure Sockets Layer (SSL) and Transport Layer Security (TLS), ensuring that data remains private. Integrity can be maintained for instance with cryptographic hashing and/or digital signatures, which can detect tampering, while availability can be protected for instance by redundancy, load balancing, and defences against denial-of-service (DoS) attacks. Access control mechanisms, including multifactor authentication and role-based access control, can be used to regulate network access. Network segmentation, such as virtual LANs (VLANs) and demilitarized zones (DMZs), can be implemented to limit access to sensitive areas and reduces the impact of breaches, while firewalls filter traffic based on predefined rules, providing an essential barrier between internal and external networks.

Advanced security measures for networking can be implemented, for instance, including encryption for wireless networks through protocols like Wi-Fi Protected Access 3 (WPA3), which can prevent unauthorized access to Wi-Fi. Intrusion detection and prevention systems (IDS/IPS) can be used to monitor network traffic for malicious activity, while virtual private networks (VPNs) can be used to establish secure connections for remote access over public networks. Regular security assessments, such as penetration testing and vulnerability scanning, identify weaknesses, and security information and event management (SIEM) systems may be leveraged to provide real-time insights into potential threats. A layered security approach, or defence in depth, can combine multiple controls across different levels of the network, enhancing resilience against both internal and external attacks by creating multiple barriers that attackers must overcome.

Distributed computing is a possible implementation in which multiple processing devices work together to perform tasks described herein. For example, a method or a method step may execute within a single thread on one processing device or be distributed across multiple threads, cores, or processors on a single device or across multiple devices. Distributed computing can help implement parallelization, where tasks are split into smaller subtasks that are processed concurrently, significantly improving processing speed and efficiency. This approach is well suited to applications with high computational demands, such as data analysis, machine learning, and large-scale simulations. In some implementations, processors are located within a single physical location, while in others, they may be spread across multiple sites, allowing for redundant and resilient computing infrastructures.

Distributed computing can also be implemented within a cloud computing environment, offering flexibility and scalability. Cloud computing architectures enable the allocation of computational resources on demand, allowing tasks to utilize as many or as few resources as needed for efficient execution. For instance, a single computational process may span multiple virtual machines, distributed across data centres in different geographical locations, to achieve optimal performance and fault tolerance. By leveraging multi-tenant architectures and dynamic scaling, cloud platforms allocate resources only as needed, reducing idle computational power. Furthermore, this approach facilitates cost efficiency, as users pay only for the resources they consume. Additionally, cloud computing's ability to pool resources across large-scale infrastructure provides inherent redundancy and resilience, ensuring high availability for critical applications. Cloud computing can include employing containers and microservices to enhance resource efficiency and streamline deployment. Containers encapsulate applications and their dependencies in lightweight, portable units that can run consistently across different environments. This allows distributed computing tasks to be executed reliably across heterogeneous systems, reducing compatibility issues. Microservices architectures further divide applications into smaller, independently deployable services, each responsible for a specific functionality. These services can scale independently, ensuring that resources are allocated precisely where needed and minimizing waste. Together, containers and microservices enable more efficient use of computational resources, shorter deployment cycles, and improved fault isolation.

The systems and methods described herein can be distributed using edge computing architectures. Edge computing can introduce additional layers to distributed and cloud computing by bringing certain processing capabilities closer to data sources, such as sensors or devices in the industrial Internet of Things (IIoT). In this architecture, certain computational tasks can be offloaded to edge devices, such as gateways or local servers, reducing latency and minimizing the volume of data transmitted to centralized data centres. This approach can be particularly advantageous in IIoT applications where real-time decision-making can be critical, such as predictive maintenance, autonomous control systems, or industrial automation. By processing data locally, edge computing can reduce bandwidth requirements, enhance data privacy, and ensure continuity of operations even when connectivity to the cloud is intermittent. This integration of edge and cloud computing can allow organizations to benefit from both localized processing and the scalability of centralized resources.

The systems and methods described herein may also be distributed in one or more computer program products, each including a computer-readable medium that bears computer-usable instructions for one or more processors. These instructions can exist in various forms, including compiled and non-compiled code, providing the flexibility needed for deployment in diverse computing environments. For example, compiled binaries may be optimized for specific hardware, while interpreted scripts or markup files can be deployed in environments where cross-platform compatibility or rapid updates are needed.

The storage and retrieval of data in a computer system may involve various data storage solutions, including relational databases, which store data in structured tables with defined relationships, and NoSQL databases, which offer more flexible storage schemas suited to unstructured or semi-structured data. In-memory databases, which store data entirely in RAM for rapid access, can also be used in applications where low latency is desirable. These data storage solutions may be implemented on local servers, within distributed storage systems, or as part of cloud-based infrastructures, offering scalability and accessibility as required by the application. Distributed storage solutions can enable high availability and fault tolerance, ensuring that data remains accessible even if one part of the storage infrastructure fails.

Input and output devices connected to the processing device can facilitate interaction with users and other systems. Input devices can include standard peripherals, such as keyboards, mice, touchscreens, and microphones, as well as specialized input devices, such as biometric scanners, cameras, and sensors for capturing environmental data. Output devices may encompass monitors, printers, speakers, projectors, and other display systems that present information to users in various formats. These input and output devices enable users to interact with the system in intuitive ways, supporting diverse functionalities from user control of applications to data visualization and multimedia output.

The systems and methods described herein are thus capable of deployment across a broad spectrum of computing environments, supporting applications from simple embedded systems to large-scale distributed computing networks. Each component and approach described herein contributes to the versatility and adaptability of the invention, making it suitable for a wide variety of practical implementations across industries and use cases.

In this disclosure, unless the context explicitly requires otherwise, the term "comprise" and its variations, such as "comprises" and "comprising," are intended to be interpreted in an inclusive manner. This means that the presence of specified features or elements does not exclude the possibility of additional features, elements, or steps being included in various embodiments.

Any reference to prior art publications within this disclosure should not be taken as an acknowledgment or admission that these publications form part of the common general knowledge in the relevant field, whether in any particular jurisdiction or globally.

The examples provided in the above description serve to illustrate specific embodiments and convey certain features and principles. However, those skilled in the art will recognize that individual features, elements, and functionalities within the disclosed embodiments may be adapted, modified, or combined in numerous ways without departing from the core spirit or intended scope of the described subject matter. Therefore, the foregoing description is meant to be illustrative rather than limiting, with the scope being defined by the appended claims, which are intended to encompass all variations and modifications within the broadest interpretation permitted by applicable law.

## Claims

1. A collision avoidance system (100) for a road train comprising a tractor (110) and at least one dolly (120a-f), the system comprising:
at least one exteroceptive sensor (112) mounted to the tractor and configured to acquire environmental data;
at least one proprioceptive sensor mounted to the tractor and configured to acquire a tractor direction, a tractor speed and/or a tractor velocity; and
at least one processor configured to:
detect objets (130) based on the environmental data,
compute a trajectory of each of the at least one dolly based on dimensions of the tractor, dimensions of the at least one dolly, a number of the at least one dolly, the tractor direction, the tractor speed and/or the tractor velocity, and
determine whether the trajectory intersects a boundary of one of the objects.

2. The system of claim 1, wherein the road train is an airside vehicle.

3. The system of claim 1 or 2, wherein a coupling of the tractor with a first dolly (114, 122a) defines a first angle (125a) and a coupling of the first dolly with a second dolly (124a, 122b) defines a second angle (125b), and wherein the first angle and the second angle can be distinct angles.

4. The system of any one of claims 1 to 3, wherein each of the at least one dolly is sensorless.

5. The system of any one of claims 1 to 4, wherein the at least one exteroceptive sensor is mounted at the front of the tractor, and wherein detecting the objects corresponds to detecting objects in an area in front of the tractor.

6. The system of any one of claims 1 to 5, wherein the at least one processor is configured to perform the intersection determination by identifying a detection envelope (210) divided into:
a first zone (215) corresponding to an area in front of a trajectory of the tractor;
a second zone (217a) corresponding to an area outside the first zone and inside a left horizontal clearance of the road train; and
a third zone (217b) corresponding to an area outside the first zone and inside a right horizontal clearance of the road train.

7. The system of any one of claims 1 to 6, wherein the at least one processor is configured to perform the intersection determination by determining whether the road train will intersect the boundary within a time threshold based at least in part on the tractor speed.

8. The system of any one of claims 1 to 7, further comprising an interface mounted on the tractor, the interface being configured, in response to the processor determining that the trajectory intersects the boundary of the one of the objects, to alert an operator via an audible alert configured to provide an indication of a collision risk level by varying a beeping frequency and/or a volume and/or a visual warning configured to provide an indication of a collision risk level by varying a flashing frequency and/or a colour.

9. The system of any one of claims 1 to 8, further comprising a dolly presence detection sensor (116) mounted to the tractor, the dolly presence detection sensor being configured to detect whether the at least one dolly is coupled to the tractor, wherein the processor is configured to activate rearside collision detection in response to the at least one dolly being coupled to the tractor.

10. The system of any one of claims 1 to 9, wherein the road train implements autonomous driving, and wherein road train is configured, in response to the processor determining that the trajectory intersects the boundary of the one of the objects, to actuate brakes and/or to plan a new trajectory.

11. A collision avoidance method (400) for a road train comprising a tractor and at least one dolly, the method comprising:
acquiring environmental data (410) via at least one exteroceptive sensor;
detecting objets based on the environmental data (420);
acquiring tractor direction data (430) and/or tractor speed data (450) via at least one proprioceptive sensor;
computing a trajectory of each of the at least one dolly based on dimensions of the tractor, dimensions of the at least one dolly, a number of the at least one dolly, the tractor direction data and/or the tractor speed data (450); and
assessing a risk of the trajectory intersecting a boundary of one of the objects (460).

12. The method of claim 11, wherein the road train is an airside vehicle.

13. The method of claim 11 or 12, wherein a coupling of the tractor with a first dolly defines a first angle and a coupling of the first dolly with a second dolly defines a second angle, and wherein the first angle and the second angle can be distinct angles.

14. The method of any one of claims 11 to 13, wherein each of the at least one dolly is sensorless.

15. The method of any one of claims 11 to 14, wherein the intersection determination comprises determining whether the road train will intersect the boundary within a time threshold based at least in part on the tractor speed.
